(19) Europäisches Patentamt
European Patent Office
Office européen des brevets

(11) **EP 4 588 616 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **25152980.6**

(22) Anmeldetag: **21.01.2025**

(51) Internationale Patentklassifikation (IPC):
**B25B 13/06** *(2006.01)* **F16B 23/00** *(2006.01)*

(52) Gemeinsame Patentklassifikation (CPC):
**B25B 13/065; F16B 23/003**

(54) **SCHRAUBVERBINDUNGSELEMENT MIT AUSSENMEHRKANTANTRIEB**

SCREW CONNECTION ELEMENT WITH EXTERNAL POLYGON DRIVE

ELÉMENT DE RACCORDEMENT À VIS AVEC ENTRAÎNEMENT POLYGONAL EXTERNE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.01.2024 DE 202024100321 U**

(43) Veröffentlichungstag der Anmeldung:
**23.07.2025 Patentblatt 2025/30**

(73) Patentinhaber: **Sporn, Chris**
**08261 Schöneck (DE)**

(72) Erfinder: **Sporn, Chris**
**08261 Schöneck (DE)**

(74) Vertreter: **Werner, André**
**Kaufmann**
**Patent- und Markenanwälte**
**Loschwitzer Straße 42**
**01309 Dresden (DE)**

(56) Entgegenhaltungen:
**US-A- 5 370 021**     **US-A1- 2003 077 113**
**US-A1- 2011 217 675**     **US-B1- 6 729 211**

## EP 4 588 616 B1

**Beschreibung**

Die Erfindung betrifft ein Schraubverbindungselement mit Außenmehrkantantrieb zum Antreiben mit einem Mehrkantsteckschlüssel, wobei das in Form einer Schraubenmutter oder Schraube ausgebildete Schraubverbindungselement sich insbesondere für Schraubverbindungen eignet, die an schwer zugänglichen Stellen bzw. in einem beengten Arbeitsraum zu montieren oder zu demontieren sind.

Außenmehrkantantriebe von Schraubverbindungselementen, d. h. von Schraubenmuttern oder von Schrauben, zählen zu den weithin bekannten, konventionellen Schraubenantrieben. Die Schraubverbindungselemente besitzen hierbei einen an der Schraubenmutter oder am Schraubenkopf der Schraube ausgebildeten Mehrkantabschnitt, an dem ein Schraubenschlüssel mit einer zum Mehrkantabschnitt des Schraubverbindungselements passenden Schlüsselweite aufgesetzt wird.

Eine der am weitesten verbreiteten Formen ist der Sechskantantrieb. Bei Ausführung der Schraubenmuttern oder Schraubenköpfe mit einem Außensechskant werden als Drehwerkzeuge zur Betätigung des Schraubenantriebs zumeist Gabel-, Ring- oder Steckschlüssel verwendet. Konventionelle Sechskantschrauben oder Sechskantmuttern, wie sie zum Beispiel in DIN EN ISO 4017 oder DIN EN ISO 4032 standardisiert sind, besitzen die Grundform eines geraden Sechskantprismas, dessen Mantelflächen die Schlüsselflächen bilden, an denen der Schraubenschlüssel zum Anziehen oder Lösen des Schraubverbindungselements angreift. Konventionelle Steckschlüssel zum Antreiben von Sechskantmuttern oder -schrauben besitzen zumeist eine Sechskantaussparung mit der Grundform eines geraden Sechskantprismas, d. h. einen geraden Außensechskant; sie müssen daher axial gerade auf den Sechskantabschnitt des Schraubverbindungselements aufgesetzt werden, um das Schraubverbindungselement zum Anziehen oder Lösen drehen zu können. Gabelschlüssel können zwar unter Veränderung des Winkels benutzt werden; jedoch erfordern diese - im Unterschied zu Steckschlüsseln - einen großen Betätigungsradius beim Drehen des Schraubverbindungselements. Für die Montage oder Demontage von Schraubverbindungen in beengten Arbeitsräumen, d. h. Schraubverbindungen, bei denen im Bereich der zu betätigenden Schraubenmutter oder des Schraubenkopfs nur begrenzter Platz für das Aufsetzen des Werkzeugs vorhanden ist, können Steckschlüssel aufgrund ihrer axialen Baulänge bzw. Gabel- und Ringschlüssel aufgrund ihres Bestätigungsradius mitunter nicht oder nur mit erheblichen Mühen verwendet werden.

Für die Montage oder Demontage von Innensechskantschrauben können in beengten Arbeitsräumen Kugelkopf-Sechskantschlüssel zum Anziehen oder Lösen verwendet werden. Bekannt sind diese Kugelkopf-Sechskantschlüssel zum Beispiel aus DE 20 2009 015 275 U1 oder US 9 763 754 B2. Diese ermöglichen es, den Schraubenkopf auch mit einem abgewinkelten eingesetzten Steckschlüssel zu drehen. Die in den Schraubenkopf eingelassene Innensechskantaussparung konventioneller Innensechskantschrauben weist hierbei die Grundform eines geraden Sechskantprismas auf.

Bekannt aus WO 2014/012970 A1 ist ferner eine Abutmentschraube für Kieferimplantate, die am Schraubenkopf einen Kugelkopf-Außensechskantantrieb aufweist, der ähnlich den Kugelkopf-Sechskantschlüsseln zum Anziehen oder Lösen von Innensechskantschrauben ausgebildet ist und der mittels eines speziellen Mehrkantsteckwerkzeugs betätigt wird, welches auch abgewinkelt aufgesetzt werden kann. Schrauben mit Kugelkopf-Außensechskantantrieb sind zudem bekannt aus DE 298 19 955 U1. US 2003/077113 A1 zeigt ein Schraubverbindungselement gemäß dem Oberbegriff des Anspruchs 1.

Ein Nachteil der Kugelkopf-Sechskantantriebe ist die höhere Flankenbelastung der Schlüsselflächen und das damit verbundene Risiko der Kantenbeschädigung, das insbesondere bei häufigerem Anziehen oder Lösen erhöht zum Tragen kommt. Die Anwendung des Kugelkopf-Sechskantantriebs beschränkt sich daher auf die Werkzeugseite, die hinsichtlich des Werkzeugwerkstoffs leichter an die höheren Flanken- bzw. Kantenlasten anpassbar ist, oder auf Spezialschrauben, wie sie zum Beispiel in der Kieferorthopädie verwendet werden, d. h. Schrauben, die im Regelfall selten bzw. nur einmal betätigt werden müssen.

Der Erfindung liegt die Aufgabe zugrunde, die vorgenannten Nachteile zu überwinden und ein Schraubverbindungselement mit optimiertem Außenmehrkantantrieb zum Antreiben mit einem konventionellen Mehrkantsteckschlüssel als Drehwerkzeug bereitzustellen, wobei der Außenmehrkantantrieb es ermöglichen soll, das Schraubverbindungselement, das vorzugsweise als eine im Übrigen konventionell aufgebaute Schraube oder Schraubenmutter ausgebildet ist, mittels des abwinkelbar aufsetzbaren Drehwerkzeuges zu betätigen. Hierbei soll der optimierte Außenmehrkantantrieb auch bei einem abgewinkelten aufgesetzten Mehrkantsteckschlüssel eine gute kantenschonende Kraftübertragung vom Drehwerkzeug auf das Schraubverbindungselement gewährleisten.

Diese Aufgabe wird durch ein mit Außenmehrkantantrieb versehenes Schraubverbindungselement mit den Merkmalen nach Anspruch 1 gelöst; zweckmäßige Ausgestaltungen und Weiterbildungen der Erfindung sind in den Ansprüchen 2 bis 10 beschrieben.

Nach Maßgabe der Erfindung ist das Schraubverbindungselement mit Außenmehrkantantrieb in Form einer Schraubenmutter oder einer Schraube ausgebildet. Als Drehwerkzeug zur Betätigung des Außenmehrkantantriebs des Schraubverbindungselements dient bestimmungsgemäß ein konventioneller Mehrkantschraubenschlüssel, insbesondere ein konventioneller Mehrkantsteckschlüssel, d. h. ein Steckschlüssel, der eine Mehrkantaussparung mit der Grundform eines geraden Prismas bzw. mit einem geraden Außenmehrkant aufweist.

In grundsätzlich bekannter Weise besitzt das Schraubverbindungselement einen sich axial entlang einer Mittelachse des Schraubverbindungselements erstreckenden Gewindeabschnitt, einen zur Ausbildung des Außenmehrkantantriebs am äußeren Umfang der Mutter oder am äußeren Umfang eines Schraubenkopfs der Schraube ausgebildeten Mehrkantabschnitt, eine am werkzeugseitigen axialen Endbereich des Mehrkantabschnitts angeordnete, senkrecht zur Mittelachse ausgerichtete ebene Stirnfläche sowie eine am anlageseitigen axialen Endbereich des Mehrkantabschnitts angeordnete, senkrecht zur Mittelachse ausgerichtete Anlageebene. Die Stirnfläche erstreckt sich in einer Ebene, die auch als Stirnebene bezeichnet wird. In der Anlageebene kann am Schraubverbindungselement eine freie Oberfläche ausgebildet sein, die dann als Anlagefläche bezeichnet wird. Die Anlageebene kann aber auch im Inneren des Schraubverbindungselements liegen, zum Beispiel, wenn ein Bund am anlageseitigen Endbereich ausgebildet ist. Als anlageseitiger axialer Endbereich im Sinne dieser Beschreibung ist die Seite des Schraubverbindungselements zu verstehen, der an einem zu verbindenden Werkstück anliegt. An dem dem anlageseitigen axialen Endbereich gegenüberliegenden Endbereich befindet sich die freiliegende Stirnfläche, auf die der Steckschlüssel zur Betätigung bzw. zum Drehen des Schraubverbindungselements aufgesetzt wird.

Der Mehrkantabschnitt erstreckt sich zwischen der Stirnfläche (bzw. Stirnebene) und der Anlageebene über eine vorgegebene Mehrkantaxiallänge. Der axiale Abstand einer innerhalb des Mehrkantabschnitts angeordneten, senkrecht zur Mittelachse ausgerichteten Querschnittsebene von der Stirnfläche wird als Stirnflächenabstand bezeichnet.

Der Mehrkantabschnitt weist mehrere sich jeweils von der Stirnfläche zur Anlageebene erstreckende Schlüsselflächen auf. Jede Schnittlinie einer der Schlüsselflächen mit einer senkrecht zur Mittelachse des Schraubverbindungselements ausgerichteten Querschnittsebene bildet eine Schlüsselflächenquerkonturlinie. Sämtliche Schlüsselflächen sind erfindungsgemäß so ausgebildet, dass jede dieser Schlüsselflächenquerkonturlinien gerade verläuft.

Die umfänglich aneinandergrenzenden Schlüsselflächen des Mehrkantabschnitts bilden in allen senkrecht zur Mittelachse des Schraubverbindungselements ausgerichteten Querschnittsebenen eine Querschnittskontur mit der Form eines konvexen Polygons, wobei die Anzahl der Eckpunkte dieser polygonalen Querschnittskontur, d. h. des konvexen Polygons, der Anzahl der Schlüsselflächen des Mehrkantabschnitts entspricht.

Die umfänglich aneinandergrenzenden Schlüsselflächen des Mehrkantabschnitts bilden an ihren Berührungslinien Kanten des Mehrkantabschnitts, die jeweils vollständig in einer die Mittelachse beinhaltendenden Axialschnittebene des Schraubverbindungselements verlaufen.

Jede der Schlüsselflächen weist eine von der Stirnfläche zur Anlageebene reichende Schlüsselflächenaxialkonturlinie auf, die den Verlauf der Schnittline der jeweiligen Schlüsselfläche mit einer die Mittelachse beinhaltendenden, senkrecht zu den Schlüsselflächenquerkonturlinien der jeweiligen Schlüsselfläche stehenden Axialschnittebene innerhalb dieser Axialschnittebene darstellt. Der Abstand eines spezifischen Punktes der Schlüsselflächenaxialkonturlinie senkrecht zur Mittelachse wird als Axialkonturhöhe bezeichnet.

Erfindungsgemäß weist der Mehrkantabschnitt des Schraubverbindungselements einen ersten axialen Teilbereich und einen zweiten axialen Teilbereich auf, wobei der erste axiale Teilbereich sich von der Stirnfläche zu einer senkrecht zur Mittelachse ausgerichteten Übergangsebene und der zweite axiale Teilbereich sich von der Übergangsebene zur Anlageebene erstreckt. Jede der Schlüsselflächen besitzt jeweils einen ersten, innerhalb des ersten axialen Teilbereichs liegenden Schlüsselflächenabschnitt und einen zweiten, innerhalb des zweiten axialen Teilbereichs liegenden Schlüsselflächenabschnitt.

Der erste axiale Teilbereich des Mehrkantabschnitts ist kuppelförmig ausgebildet, d. h. radial kuppel- bzw. kugelartig ausgebaucht und durch die Stirnfläche axial abgeplattet. Diese kuppelförmige Ausbildung des ersten axialen Teilbereichs des Mehrkantabschnitts kann anschaulich in etwa mit der Form gebauchter Turmhauben, zum Beispiel der Welschen Haube der Münchner Frauenkirche, verglichen werden. Jede Schlüsselfläche und mithin ihre jeweilige Schlüsselflächenaxialkonturlinie ist innerhalb des ersten Schlüsselflächenabschnitts - in axialer Erstreckung - konvex nach außen gewölbt. Die Wölbung der Schlüsselflächenaxialkonturlinie weist hierbei ein Wölbungsmaximum mit einer maximalen Axialkonturhöhe bei einem zwischen der Stirnfläche und der Übergangsebene liegenden Stirnflächenabstand des Wölbungsmaximums auf.

Der zweite axiale Teilbereich des Mehrkantabschnitts ist in Form eines von der Übergangsebene zur Anlageebene hin sich verjüngenden, geraden Pyramidenstumpfes ausgebildet; die Schlüsselflächenaxialkonturlinie ist innerhalb des zweiten Schlüsselflächenabschnitts jeder der Schlüsselflächen jeweils eine Gerade. Dieses innerhalb des zweiten Schlüsselflächenabschnitts gerade Teilstück der Schlüsselflächenaxialkonturlinie schließt mit der Mittelachse einen Neigungswinkel im Bereich von 10° bis 40° ein.

Erfindungsgemäß besitzt die Schlüsselflächenaxialkonturlinie jeder der Schlüsselflächen über ihre jeweilige gesamte Länge einen stetigen Kurvenverlauf, d. h., der Kurvenverlauf der Schlüsselflächenaxialkonturlinie ist sprung- und knickfrei. Insbesondere am Übergang vom ersten axialen Teilbereich zum zweiten axialen Teilbereich des Mehrkantabschnitts, d. h. bei Durchlaufen der Übergangsebene, ist die Schlüsselflächenaxialkonturlinie frei von Unstetigkeitsstellen, wie zum Beispiel Sprüngen oder Knicken.

Mittels des erfindungsgemäßen Schraubverbindungselements lassen sich Schraubverbindungen bei beengtem Arbeitsraum anziehen oder lösen, indem der Steckschlüssel abgewinkelt auf das Schraubverbindungselement aufgesetzt wird. Schraubverbindungen können bei Verwendung des Schraubverbindungselements unter einem Winkel von bis zu circa 30° Schrägstellung zwischen Steckschlüsseldrehachse und Mittelachse des Schraubverbindungselements sicher und fest angezogen werden. Der als Drehwerkzeug zum Anziehen oder Lösen verwendete Mehrkantsteckschlüssel besitzt einen nach grundsätzlich bekannter Art und Weise geformten, zum Mehrkantabschnitt des Schraubverbindungselements passenden Innenmehrkant. Die Kraft- bzw. Momentübertragung erfolgt durch Formschluss der korrespondierenden Geometrieelemente. Für die erfindungsgemäßen Schraubverbindungselemente ist der Mehrkantsteckschlüssel hierbei geringfügig größer dimensioniert als der Mehrkantabschnitt des Schraubverbindungselements im Bereich des Wölbungsmaximums der Schlüsselflächenaxialkonturlinie bzw. das Schraubverbindungselement ist im Bereich des Wölbungsmaximums der Schlüsselflächenaxialkonturlinie den Dimensionen des Mehrkantsteckschlüssels angepasst. D. h., die Schraubverbindungselemente können mit konventionell verfügbaren Steckschlüsseln, zum Beispiel Stecknüssen oder Rohrsteckschlüsseln, betätigt werden. Spezialwerkzeuge sind nicht erforderlich. Das Anziehen oder Lösen der Schraubverbindungselemente kann aber ebenso mit anderen handelsüblichen Schraubenschlüsseln, wie zum Beispiel Gabelschlüsseln, Ringschlüsseln, Ratschen oder ähnlichen Handwerkzeugen, erfolgen.

Der Außenmehrkantantrieb ist grundsätzlich für Schrauben oder Schraubenmuttern mit gängigen Schlüsselweiten anwendbar, sodass die herkömmlichen (metrischen oder zölligen) Steckschlüsselsätze zum Anziehen oder Lösen der Schraubverbindungselemente nutzbar sind. Die Schraubverbindungselemente können aus verschiedenen Materialen gefertigt werden, insbesondere aus den herkömmlichen Werkstoffen für Standard-Schrauben oder Schraubenmuttern. Das Schraubverbindungselement ist zudem mit Gewinden in allen gängigen Gewindegrößen und -arten realisierbar.

Die Kraft- und Momentübertragung erfolgt bei den erfindungsgemäßen Schraubverbindungselementen primär im Bereich des kuppelförmig geformten ersten axialen Teilbereichs des Mehrkantabschnitts, insbesondere im Bereich des Wölbungsmaximums der Schlüsselflächenaxialkonturlinie. Im Vergleich zu konventionellen, d. h. geraden, Außenmehrkantantrieben erfolgt die Kraftübertragung vom Schlüsselmehrkant auf den Mehrkantabschnitt des Schraubverbindungselements zur Ermöglichung des abgewinkelten Anziehens und Lösens bei den erfindungsgemäßen Schraubverbindungselementen notwendigerweise über einen geringeren Anteil kontaktierender Schlüsselflächenbereiche und mithin höheren Flanken- bzw. Kantenbelastungen. Ein besonderer Vorteil des erfindungsgemäß ausgebildeten Schraubverbindungselements besteht darin, dass die Schlüsselflächen bei abgewinkeltem Anziehen oder Lösen im zweiten axialen Teilbereich des Mehrkantabschnitts entlang der Kanten einzelner Schlüsselflächen, an denen ein abgewinkelter aufgesetzter Schlüsselmehrkant anliegt, ebenfalls kontaktieren und zur Kraftübertragung beitragen, sodass die höhere Flanken- und Kantenbelastung der Schlüsselflächen zumindest teilweise kompensiert wird.

Der beschriebene Außenmehrkantantrieb ist sowohl am Schraubenkopf von Schrauben als auch bei Schraubenmuttern realisierbar. Die erfindungsgemäßen Schraubverbindungselemente eignen sich insbesondere für Schraubverbindungen, die aufgrund beengter Arbeitsräume das gerade Aufsetzen von Steckschlüsseln einschränken oder nicht zulassen, die aber mit abgewinkelten aufsetzbaren Steckschlüsseln problemlos montierbar oder demontierbar sind.

Aufgrund der gegenüber konventionellen Schraubenkopf- oder Schraubenmutternformen ästhetisch ansprechenden Formgebung des Mehrkantabschnitts sind die erfindungsgemäßen Schraubverbindungselemente zudem als Zierschrauben oder Ziermuttern einsetzbar.

Gemäß einer Ausgestaltung des Schraubverbindungselements liegt der bevorzugte Stirnflächenabstand der Übergangsebene im Bereich von 60 % ± 5 % der Mehrkantaxiallänge.

Die Ausbauchung bzw. Auswölbung des ersten axialen Teilbereichs des Mehrkantabschnitts ist vorzugsweise so gestaltet, dass der Stirnflächenabstand des Wölbungsmaximums bei 40 % ± 5 % der Mehrkantaxiallänge liegt.

Weiterhin kann vorgesehen sein, dass innerhalb des zweiten Schlüsselflächenabschnitts jeder Schlüsselfläche der eingeschlossene Neigungswinkel zwischen der in diesem Abschnitt gerade verlaufenden Schlüsselflächenaxialkonturlinie und der Mittelachse jeweils im Bereich von 25° ± 5° liegt.

Der Mehrkantabschnitt des Schraubverbindungselements ist vorzugsweise so dimensioniert, dass die maximale Axialkonturhöhe der Schlüsselflächenaxialkonturlinie im Bereich von 65 % ± 5 % der Mehrkantaxiallänge des Mehrkantabschnitts liegt.

Gemäß einer Ausgestaltung besitzt die Schlüsselflächenaxialkonturlinie innerhalb des ersten Schlüsselflächenabschnitts jeder der Schlüsselflächen einen parabolischen Kurvenverlauf. D. h., der funktionale Zusammenhang zwischen Axialkonturhöhe und Stirnflächenabstand, deren Funktionsgraph die Schlüsselflächenaxialkonturlinie darstellt, kann im ersten Schlüsselflächenabschnitt als Polynom zweiter Ordnung angegeben werden.

Die Konturhöhe der Schlüsselflächenaxialkonturlinie innerhalb des ersten Schlüsselflächenabschnitts jeder der Schlüsselflächen liegt bei vorgegebener Mehrkantaxiallänge vorzugsweise innerhalb eines Bereiches von ± 5 % der nach der Funktion

$$Konturh\ddot{o}he = \left(\left(-\frac{4}{5}\left(\frac{Stirnfl\ddot{a}chenabstand}{Mehrkantaxiall\ddot{a}nge}\right)^2 + \frac{5}{8}\left(\frac{Stirnfl\ddot{a}chenabstand}{Mehrkantaxiall\ddot{a}nge}\right) + \frac{2}{7}\right) \cdot Mehrkantaxiall\ddot{a}nge\right)$$

ermittelten Konturhöhe.

Vorzugsweise bilden die umfänglich aneinandergrenzenden Schlüsselflächen des Mehrkantabschnitts in allen senkrecht zur Mittelachse des Schraubverbindungselements ausgerichteten Querschnittsebenen eine Querschnittskontur mit der Form eines um die Mittelachse drehsymmetrisch ausgebildeten konvexen Polygons.

Hierbei kann vorgesehen sein, dass der Mehrkantabschnitt eine geradzahlige Anzahl von Schlüsselflächen aufweist, wodurch Querschnittskonturen mit geradzähliger Drehsymmetrie entstehen. Insbesondere geeignet sind polygonale Querschnittskonturen mit zwei-, vier-, sechs- oder achtzähliger Drehsymmetrie, wobei der Mehrkantabschnitt gleichzeitig entweder als Vierkant-, Sechskant- oder Achtkantabschnitt ausgebildet ist.

Besonders bevorzugt bilden die umfänglich aneinandergrenzenden Schlüsselflächen des Mehrkantabschnitts in allen senkrecht zur Mittelachse des Schraubverbindungselements ausgerichteten Querschnittsebenen eine Querschnittskontur mit der Form eines regelmäßigen konvexen Sechsecks. Der Mehrkantabschnitt ist mithin als Sechskantabschnitt und der Außenmehrkantantrieb des Schraubverbindungselements entsprechend als Außensechskantantrieb ausgebildet.

Gemäß der beschriebenen Ausgestaltung des Mehrkantabschnitts mit geradzahliger Anzahl von Schlüsselflächen weist der als Außenmehrkantantrieb ausgebildete Mehrkantabschnitt zumindest eine Schlüsselweite auf, die der Summe der maximalen Axialkonturhöhen zweier sich gegenüberliegender, paralleler Schlüsselflächen entspricht. D. h., die bzw. eine der Schlüsselweiten des Außenmehrkantantriebs entspricht dem Abstand der jeweils gegenüberliegenden, parallelen Schlüsselflächen in der senkrecht zur Mittelachse ausgerichteten Querschnittsebene am Wölbungsmaximum des ersten axialen Teilbereichs des Mehrkantabschnitts.

Es kann ferner vorgesehen sein, dass das Schraubverbindungselement anlageseitig einen Bund aufweist, der im Regelfall als Kreisscheibe ausgebildet ist. Der Bund schließt sich an der Anlageebene axial an den zweiten axialen Teilbereich des Mehrkantabschnitts an. Der Bund bildet - in grundsätzlich bekannter Weise - eine in das Schraubverbindungselement integrierte Beilagscheibe. In Verbindung mit dem erfindungsgemäß ausgebildeten Mehrkantabschnitt des Schraubverbindungselements hat sich der Bund als besonders zweckmäßig erwiesen, da sich bei bundfreier Ausbildung des Schraubverbindungselements aufgrund der Verjüngung des zweiten Teilbereichs des Mehrkantabschnitts an der Anlageebene eine vergleichsweise geringe Anlagefläche ergibt. Durch Anbringung des Bundes wird die Materialbelastung im Bereich der Anlageebene signifikant reduziert und zudem vergleichmäßigt, da durch den integralen Bund auch Anlageungenauigkeiten, die bei Verwendung eines bundfreien Schraubverbindungselements in Verbindung mit einer separaten Beilagscheibe auftreten würden, vermieden werden.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:

Fig. 1:    eine erste Ausführung des Schraubverbindungselements als Schraubenmutter in zwei perspektivischen Ansichten,

Fig. 2:    einen Längshalbschnitt des Schraubverbindungselements gemäß der ersten Ausführung in Axialschnittansicht und Stirnflächenansicht,

Fig. 3:    eine zweite Ausführung des Schraubverbindungselements als Bundschraubenmutter in zwei perspektivischen Ansichten,

Fig. 4:    einen Längshalbschnitt des Schraubverbindungselements gemäß der zweiten Ausführung in Stirnflächenansicht (a), Axialschnittansicht (b) und Ansicht auf den Bund (c),

Fig. 5:    eine dritte Ausführung des Schraubverbindungselements als Schraube mit Bundschraubenkopf in perspektivischer Ansicht,

Fig. 6:    einen Längshalbschnitt des Schraubenkopfes (ohne Bund) des Schraubverbindungselements gemäß der dritten Ausführung in perspektivischer Ansicht, und

Fig. 7:    den Längshalbschnitt des Schraubenkopfes (ohne Bund) des Schraubverbindungselements gemäß der dritten Ausführung in Axialschnittansicht (a) und Stirnflächenansicht (b).

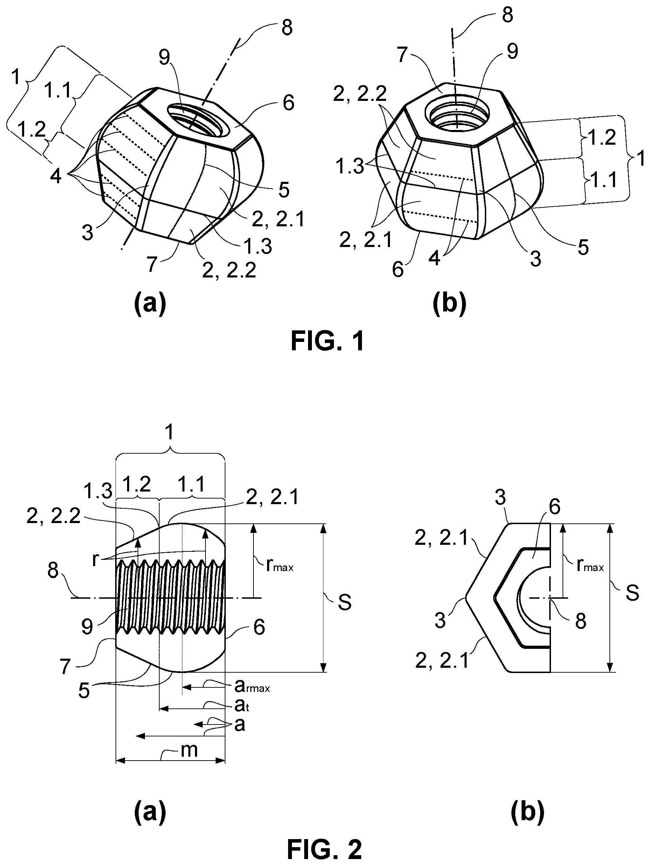

Das Schraubverbindungselement gemäß der beiden Ansichten (a) und (b) der Fig. 1 ist als bundfreie Sechskantschraubenmutter mit dem entlang der Mittelachse 8 verlaufenden Gewindeabschnitt 9 ausgebildet. Das Schraubverbindungselement besitzt sechs gleiche Schlüsselflächen 2 und entsprechend sechs gleiche Kanten 3.

Die in der Ansicht (a) der Fig. 1 sichtbare ebene Stirnfläche 6 liegt bei angezogenem Schraubverbindungselement frei. Auf der Seite der Stirnfläche 6 wird bei bestimmungsgemäßer Verwendung das Drehwerkzeug, vorzugsweise ein herkömmlicher Sechskantsteckschlüssel, auf das Schraubverbindungselement aufgesetzt; dieser axiale Endbereich des Schraubverbindungselements wird daher auch als werkzeugseitiger Endbereich bezeichnet.

Die in der Ansicht (b) der Fig. 1 sichtbare ebene Anlagefläche erstreckt sich in der Anlageebene 7. Die Anlagefläche kontaktiert bei bestimmungsgemäßer Verwendung eines der zu verbindenden Werkstücke, d. h., die Anlagefläche liegt an dessen Oberfläche an bzw. auf; dieser axiale Endbereich des Schraubverbindungselements wird daher auch als anlageseitiger Endbereich bezeichnet.

Der Mehrkantabschnitt 1 des Schraubverbindungselements erstreckt sich von der Stirnfläche 6 zur Anlageebene 7; er ist axial unterteilt in den ersten axialen, kuppelförmigen Teilbereich 1.1 (von der Stirnfläche 6 zur Übergangsebene 1.3) und den zweiten axialen, pyramidenstumpfförmigen Teilbereich 1.2 (von der Übergangsebene 1.3 zur Anlageebene 7). Der erste Schlüsselflächenabschnitt 2.1 jeder Schlüsselfläche 2 liegt im ersten axialen Teilbereich 1.1 und der zweite Schlüsselflächenabschnitt 2.2 jeder Schlüsselfläche 2 liegt entsprechend im zweiten axialen Teilbereich 1.2.

Die Schlüsselflächenquerkonturlinien 4, die jeweils die Schnittlinien einer der Schlüsselflächen 2 mit einer senkrecht zur Mittelachse 8 ausgerichteten Querschnittsebene darstellen, sind stets als Geraden ausgebildet.

Die Schlüsselflächenaxialkonturlinien 5 stellen jeweils den Verlauf der Schnittlinie der jeweiligen Schlüsselfläche 2 mit einer die Mittelachse 8 beinhaltendenden, senkrecht zu den Schlüsselflächenquerkonturlinien 4 der jeweiligen Schlüsselfläche 2 stehenden Axialschnittebene innerhalb dieser Axialschnittebene dar. Wie aus den Ansichten (a) und (b) der Fig. 1 hervorgeht, verlaufen die Schlüsselflächenaxialkonturlinien 5 folglich mittig in der jeweiligen Schlüsselfläche 2.

Die beiden Ansichten der Fig. 2 verdeutlichen die Form des Mehrkantabschnitts 1 anhand der in Ansicht (a) der Fig. 2 sichtbaren Axialschnittkonturen und anhand der in Ansicht (b) der Fig. 2 sichtbaren Querschnittskonturen.

Jeder Punkt der in Ansicht (a) der Fig. 2 beispielhaft wiedergegebenen Schlüsselflächenaxialkonturlinie 5 kann durch seinen Stirnflächenabstand a und seine dem Stirnflächenabstand a zugeordnete Axialkonturhöhe r beschrieben werden. Der Verlauf der Schlüsselflächenaxialkonturlinie 5 ist mathematisch als eine Funktion der Axialkonturhöhe r in Abhängigkeit des Stirnflächenabstands a darstellbar. Im ersten axialen Teilbereich 1.1 des Mehrkantabschnitts 1 (von der Stirnfläche 6 zur Übergangsebene 1.3) verläuft die Schlüsselflächenaxialkonturlinie 5 parabolisch; im zweiten axialen Teilbereich 1.2 des Mehrkantabschnitts 1 (von der Übergangsebene 1.3 zur Anlageebene 7) verläuft die Schlüsselflächenaxialkonturlinie 5 linear, d. h. als Gerade. Letztere schließt mit der Mittelachse 8 im Ausführungsbeispiel nach Fig. 1 und 2 einen Neigungswinkel von 25° ein.

Die axiale Lage der Übergangsebene 1.3 wird durch den Stirnflächenabstand at der Übergangebene 1.3 charakterisiert. Dieser Stirnflächenabstand at der Übergangebene 1.3 liegt für die in den Fig. 1 und 2 gezeigte ersten Ausführung des Schraubverbindungselements bei 60 % der Mehrkantaxiallände m, die dem Stirnflächenabstand r der Anlageebene 7 entspricht.

Im ersten axialen Teilbereich 1.1 des Mehrkantabschnitts 1 besitzt die Schlüsselflächenaxialkonturlinie 5 ein Wölbungsmaximum, dessen axiale Lage durch den Stirnflächenabstand $a_{rmax}$ des Wölbungsmaximums und dessen radiale Höhe durch die maximale Axialkonturhöhe $r_{max}$ charakterisiert sind. Die Schlüsselweite S des als Sechskantschraubenmutter ausgebildeten Schraubverbindungselements entspricht der doppelten Axialkonturhöhe $r_{max}$.

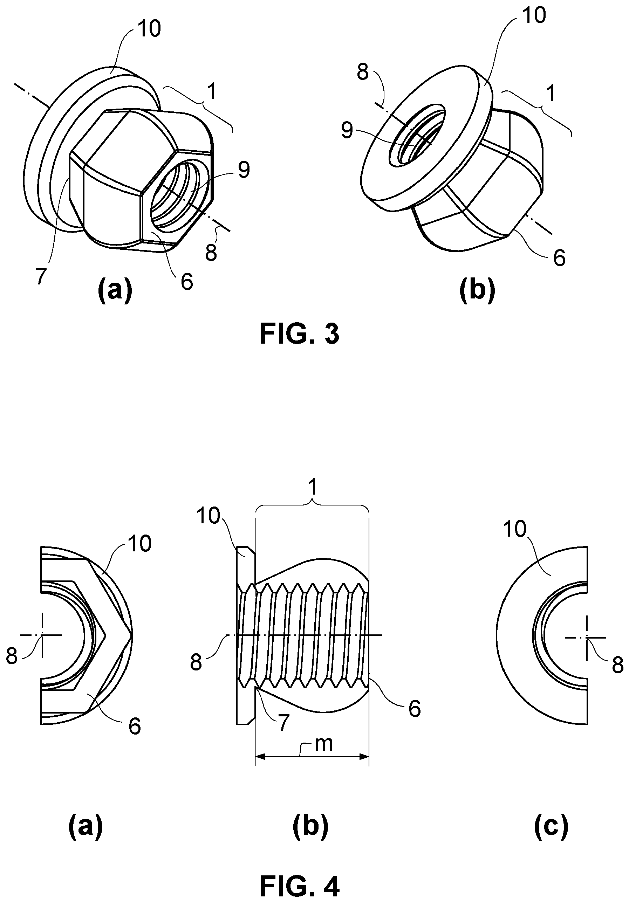

Die Fig. 3 und 4 zeigen in ihren Ansichten eine zweite Ausführung des Schraubverbindungselements als Sechskantbundschraubenmutter. Das Schraubverbindungselement entspricht bezüglich des Gewindeabschnitts 9 und des Mehrkantabschnitts 1 weitestgehend der ersten Ausführung gemäß der Fig. 1 und 2. Der als Ringscheibe ausgebildete Bund 10 schließt axial im Bereich der Anlageebene 7 direkt an den Mehrkantabschnitt 1 an. Die Kontaktfläche zu einem Werkstück befindet sich bei dieser Ausführung des Schraubverbindungselements als Bundschraubenmutter in üblicher Art und Weise am Bund 10 des Schraubverbindungselements.

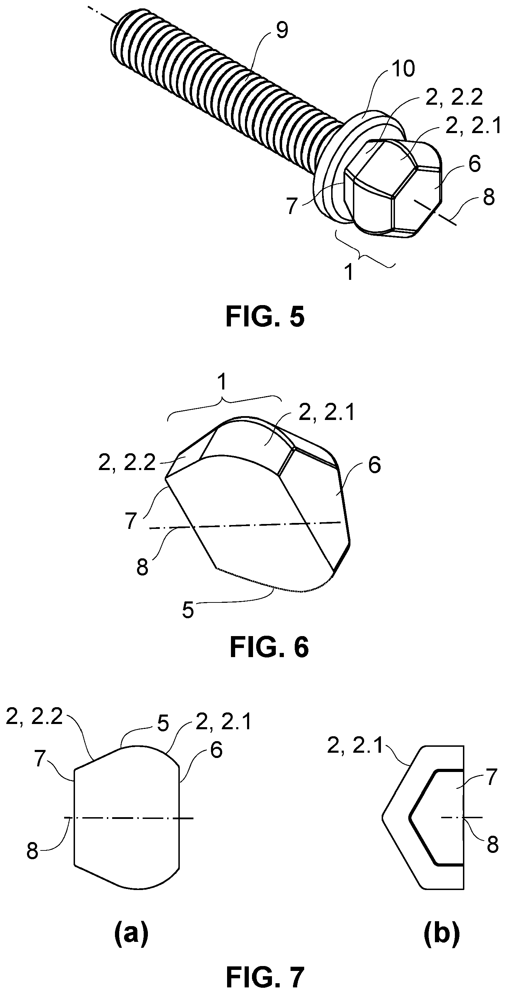

Die dritte, in Fig. 5 dargestellte Ausführung des Schraubverbindungselements als Sechskantschraube besitzt den Gewindeabschnitt 9 und einen Schraubenkopf mit dem Bund 10 und dem Mehrkantabschnitt 1. Der Bund 10 und der Mehrkantabschnitt 1 der Sechskantschraube nach Fig. 5 sind vergleichbar zum Bund 10 und zum Mehrkantabschnitt 1 der Sechskantbundschraubenmutter gemäß der zweiten, in den Fig. 3 und 4 gezeigten Ausführung gestaltet. Die Fig. 6 und 7 stellen die Details des Mehrkantabschnitts 1 des Schraubenkopfes dar. Der Verlauf der in Ansicht (a) der Fig. 7 dargestellten Schlüsselflächenaxialkonturlinie 5 entspricht dem in der Ansicht (a) der Fig. 2.

Bezugszeichenliste

1       Mehrkantabschnitt
1.1     erster axialer Teilbereich
1.2     zweiter axialer Teilbereich
1.3     Übergangsebene
2       Schlüsselfläche

| 2.1 | erster Schlüsselflächenabschnitt (werkzeugseitig) |
| 2.2 | zweiter Schlüsselflächenabschnitt (anlageseitig) |
| 3 | Kante |
| 4 | Schlüsselflächenquerkonturlinie |
| 5 | Schlüsselflächenaxialkonturlinie |
| 6 | Stirnfläche |
| 7 | Anlageebene |
| 8 | Mittelachse |
| 9 | Gewindeabschnitt |
| 10 | Bund |
| a | Stirnflächenabstand |
| $a_{rmax}$ | Stirnflächenabstand des Wölbungsmaximums |
| at | Stirnflächenabstand der Übergangebene |
| m | Mehrkantaxiallänge |
| r | Axialkonturhöhe |
| $r_{max}$ | maximale Axialkonturhöhe (am Wölbungsmaximum) |
| S | Schlüsselweite |

**Patentansprüche**

1. Schraubverbindungselement mit Außenmehrkantantrieb zum Antreiben mit einem Mehrkantsteckschlüssel, wobei das in Form einer Schraubenmutter oder Schraube ausgebildete Schraubverbindungselement aufweist:

   - einen sich axial entlang einer Mittelachse (8) des Schraubverbindungselements erstreckenden Gewindeabschnitt (9),
   - einen zur Ausbildung des Außenmehrkantantriebs am äußeren Umfang der Mutter oder am äußeren Umfang eines Schraubenkopfs der Schraube ausgebildeten Mehrkantabschnitt (1),
   - eine am werkzeugseitigen axialen Endbereich des Mehrkantabschnitts (1) angeordnete, senkrecht zur Mittelachse (8) ausgerichtete ebene Stirnfläche (6) sowie eine am anlageseitigen axialen Endbereich des Mehrkantabschnitts (1) angeordnete, senkrecht zur Mittelachse (8) ausgerichtete Anlageebene (7), wobei sich der Mehrkantabschnitt (1) zwischen der Stirnfläche (6) und der Anlageebene (7) über eine vorgegebene Mehrkantaxiallänge (m) erstreckt, und wobei der axiale Abstand einer innerhalb des Mehrkantabschnitts (1) angeordneten, senkrecht zur Mittelachse ausgerichteten Querschnittsebene von der Stirnfläche (6) als Stirnflächenabstand (a) definiert ist,

   wobei der Mehrkantabschnitt (1) mehrere sich jeweils von der Stirnfläche (6) zur Anlageebene (7) erstreckende Schlüsselflächen (2) aufweist, und wobei jede Schnittlinie einer der Schlüsselflächen (2) mit einer senkrecht zur Mittelachse (8) des Schraubverbindungselements ausgerichteten Querschnittsebene eine Schlüsselflächenquerkonturlinie (4) bildet, und wobei die Schlüsselflächen (2) so ausgebildet sind, dass alle Schlüsselflächenquerkonturlinien (4) gerade verlaufen,

   wobei die umfänglich aneinandergrenzenden Schlüsselflächen (2) des Mehrkantabschnitts (1) in allen senkrecht zur Mittelachse (8) des Schraubverbindungselements ausgerichteten Querschnittsebenen eine Querschnittskontur mit der Form eines konvexen Polygons bilden, und wobei die Anzahl der Eckpunkte dieser polygonalen Querschnittskontur der Anzahl der Schlüsselflächen (2) des Mehrkantabschnitts (1) entspricht,

   wobei jede der Schlüsselflächen (2) eine von der Stirnfläche (6) zur Anlageebene (7) reichende Schlüsselflächenaxialkonturlinie (5) aufweist, die den Verlauf der Schnittlinie der jeweiligen Schlüsselfläche (2) mit einer die Mittelachse (8) beinhaltenden, senkrecht zu den Schlüsselflächenquerkonturlinien (4) der jeweiligen Schlüsselfläche (2) stehenden Axialschnittebene innerhalb dieser Axialschnittebene darstellt, wobei der Abstand eines Punktes der Schlüsselflächenaxialkonturlinie (5) zur Mittelachse (8) als Axialkonturhöhe (r) definiert ist,

   wobei

   - der Mehrkantabschnitt (1) einen ersten axialen Teilbereich (1.1), der sich von der Stirnfläche (6) zu einer senkrecht zur Mittelachse (8) ausgerichteten Übergangsebene (1.3) erstreckt, und einen zweiten axialen Teilbereich (1.2), der sich von der Übergangsebene (1.3) zur Anlageebene (7) erstreckt, aufweist, wobei jede der Schlüsselflächen (2) jeweils einen ersten, innerhalb des ersten axialen Teilbereichs (1.1) liegenden Schlüsselflächenabschnitt (2.1) und einen zweiten, innerhalb des zweiten axialen Teilbereichs (1.2) liegenden Schlüsselflächenabschnitt (2.2) aufweist,
   - der erste axialen Teilbereich (1.1) des Mehrkantabschnitts (1) kuppelförmig ausgebildet ist, wobei die Schlüsselflächenaxialkonturlinie (5) innerhalb des ersten Schlüsselflächenabschnitts (2.1) jeder der Schlüsselflächen (2) konvex nach außen gewölbt ist, und wobei die Wölbung ein Wölbungsmaximum mit einer maximalen Axialkonturhöhe ($r_{max}$) bei einem zwischen der Stirnfläche (6) und der Übergangsebene (1.3) liegenden Stirnflächenabstand ($a_{rmax}$) des Wölbungsmaximums aufweist,

- die Schlüsselflächenaxialkonturlinie (5) jeder der Schlüsselflächen (2) über ihre jeweilige gesamte Länge einen stetigen Kurvenverlauf aufweist,

**dadurch gekennzeichnet, dass**

- der zweiten axiale Teilbereich (1.2) des Mehrkantabschnitts (1) in Form eines von der Übergangsebene (1.3) zur Anlageebene (7) hin sich verjüngenden, geraden Pyramidenstumpfes ausgebildet ist, wobei die Schlüsselflächenaxialkonturlinie (5) innerhalb des zweiten Schlüsselflächenabschnitts (2.2) jeder der Schlüsselflächen (2) jeweils eine Gerade ist und mit der Mittelachse (8) jeweils einen Neigungswinkel im Bereich von 10° bis 40° einschließt.

2.  Schraubverbindungselement nach Anspruch 1, **dadurch gekennzeichnet, dass** der Stirnflächenabstand (at) der Übergangsebene (1.3) bei 60 % $\pm$ 5 % der Mehrkantaxiallänge (m) liegt.

3.  Schraubverbindungselement nach Anspruch 1 oder 2, **dadurch gekennzeichnet, dass** der Stirnflächenabstand ($a_{rmax}$) des Wölbungsmaximums bei 40 % $\pm$ 5 % der Mehrkantaxiallänge (m) liegt.

4.  Schraubverbindungselement nach einem der Ansprüche 1 bis 3, **dadurch gekennzeichnet, dass** innerhalb des zweiten Schlüsselflächenabschnitts (2.2) jeder der Schlüsselflächen (2) der zwischen der Schlüsselflächenaxialkonturlinie (5) und der Mittelachse (8) eingeschlossene Neigungswinkel jeweils im Bereich von 25° $\pm$ 5° liegt.

5.  Schraubverbindungselement nach einem der Ansprüche 1 bis 4, **dadurch gekennzeichnet, dass** die maximale Axialkonturhöhe ($r_{max}$) der Schlüsselflächenaxialkonturlinie (5) im Bereich von 65 % $\pm$ 5 % der Mehrkantaxiallänge (m) liegt.

6.  Schraubverbindungselement nach einem der Ansprüche 1 bis 5, **dadurch gekennzeichnet, dass** die Schlüsselflächenaxialkonturlinie (5) innerhalb des ersten Schlüsselflächenabschnitts (2.1) jeder der Schlüsselflächen (2) einen parabolischen Kurvenverlauf aufweist.

7.  Schraubverbindungselement nach einem der Ansprüche 1 bis 6, **dadurch gekennzeichnet, dass** die Konturhöhe (r) der Schlüsselflächenaxialkonturlinie (5) innerhalb des ersten Schlüsselflächenabschnitts (2.1) jeder der Schlüsselflächen (2) bei vorgegebener Mehrkantaxiallänge (m) innerhalb eines Bereiches von $\pm$ 5 % der nach der Funktion

$$Konturh\ddot{o}he\ (r) = \left(\left(-\frac{4}{5}\left(\frac{Stirnfl\ddot{a}chenabstand\ (a)}{Mehrkantaxiall\ddot{a}nge\ (m)}\right)^2 + \frac{5}{8}\left(\frac{Stirnfl\ddot{a}chenabstand\ (a)}{Mehrkantaxiall\ddot{a}nge\ (m)}\right) + \frac{2}{7}\right) \cdot Mehrkantaxiall\ddot{a}nge\ (m)\right)$$

ermittelten Konturhöhe (r) liegt.

8.  Schraubverbindungselement nach einem der Ansprüche 1 bis 7, **dadurch gekennzeichnet, dass** die umfänglich aneinandergrenzenden Schlüsselflächen (2) des Mehrkantabschnitts (1) in allen senkrecht zur Mittelachse (8) des Schraubverbindungselements ausgerichteten Querschnittsebenen eine Querschnittskontur mit der Form eines um die Mittelachse drehsymmetrisch ausgebildeten konvexen Polygons bilden.

9.  Schraubverbindungselement nach Anspruch 8, **dadurch gekennzeichnet, dass** der Mehrkantabschnitt (1) eine geradzahlige Anzahl von Schlüsselflächen (2) aufweist.

10. Schraubverbindungselement nach Anspruch 9, **dadurch gekennzeichnet, dass** die umfänglich aneinandergrenzenden Schlüsselflächen (2) des Mehrkantabschnitts (1) in allen senkrecht zur Mittelachse (8) des Schraubverbindungselements ausgerichteten Querschnittsebenen eine Querschnittskontur mit der Form eines regelmäßigen konvexen Sechsecks bilden.

**Claims**

1. Screw connection element with an external polygonal drive for driving by means of a polygonal socket wrench,

   wherein the screw connection element, formed as a nut or a screw, comprises:

   - a thread section (9) extending axially along a central axis (8) of the screw connection element,
   - a polygonal section (1) formed on the outer circumference of the nut or on the outer circumference of a screw head of the screw for forming the external polygonal drive,
   - a planar end face (6) arranged at the tool-side axial end region of the polygonal section (1) and oriented perpendicularly to the central axis (8), and a contact plane (7) arranged at the contact-side axial end region of the polygonal section (1) and oriented perpendicularly to the central axis (8), wherein the polygonal section (1) extends between the end face (6) and the contact plane (7) over a predetermined polygonal section axial length (m), and wherein the axial distance of a cross-sectional plane arranged within the polygonal section (1) and oriented perpendicularly to the central axis (8) from the end face (6) is defined as the end face distance (a),

   wherein the polygonal section (1) comprises a plurality of wrenching surfaces (2) each extending from the end face (6) to the contact plane (7), and wherein the line of intersection of each wrenching surface (2) with a cross-sectional plane oriented perpendicularly to the central axis (8) of the screw connection element forms a wrenching surface transverse contour line (4), and wherein the wrenching surfaces (2) are formed such that all wrenching surface transverse contour lines (4) extend straight,
   wherein the circumferentially adjacent wrenching surfaces (2) of the polygonal section (1) form, in all cross-sectional planes oriented perpendicularly to the central axis (8) of the screw connection element, a cross-sectional contour in the form of a convex polygon, and wherein the number of corner points of this polygonal cross-sectional contour corresponds to the number of wrenching surfaces (2) of the polygonal section (1),
   wherein each wrenching surface (2) has a wrenching surface axial contour line (5) extending from the end face (6) to the contact plane (7), which represents, within an axial section plane containing the central axis (8) and oriented perpendicularly to the wrenching surface transverse contour lines (4) of the respective wrenching surface (2), the course of the line of intersection of the respective wrenching surface (2) with said axial section plane, wherein the distance of a point of the wrenching surface axial contour line (5) from the central axis (8) being defined as the axial contour height (r),
   wherein

   - the polygonal section (1) comprises a first axial partial section (1.1) extending from the end face (6) to a transition plane (1.3) oriented perpendicularly to the central axis (8), and a second axial partial section (1.2) extending from the transition plane (1.3) to the contact plane (7), wherein each wrenching surface (2) having a first wrenching surface section (2.1) lying within the first axial partial section (1.1) and a second wrenching surface section (2.2) lying within the second axial partial section (1.2),
   - the first axial partial section (1.1) of the polygonal section (1) is dome-shaped, wherein the wrenching surface axial contour line (5) within the first wrenching surface section (2.1) of each wrenching surface (2) is outwardly convexly curved, and wherein the curvature has a maximum curvature with a maximum axial contour height ($r_{max}$) at an end face distance ($a_{rmax}$) of the maximum curvature located between the end face (6) and the transition plane (1.3),
   - the wrenching surface axial contour line (5) of each wrenching surface (2) has a continuous curve profile over its entire length,

   **characterised in that**

   - the second axial partial section (1.2) of the polygonal section (1) is formed as a straight truncated pyramid tapering from the transition plane (1.3) towards the contact plane (7), wherein the wrenching surface axial contour line (5) within the second wrenching surface section (2.2) of each wrenching surface (2) is a straight line and encloses with the central axis (8) an inclination angle in the range of 10° to 40°.

2. Screw connection element according to claim 1, **characterised in that** the end face distance (at) of the transition plane (1.3) is 60 % ± 5 % of the polygonal section axial length (m).

3. Screw connection element according to claim 1 or 2, **characterised in that** the end face distance ($a_{rmax}$) of the

maximum curvature is 40 % $\pm$ 5 % of the polygonal section axial length (m).

4. Screw connection element according to any one of claims 1 to 3, **characterised in that,** within the second wrenching surface section (2.2) of each wrenching surface (2), the inclination angle enclosed between the wrenching surface axial contour line (5) and the central axis (8) lies within a range of 25° $\pm$ 5°.

5. Screw connection element according to any one of claims 1 to 4, **characterised in that** the maximum axial contour height ($r_{max}$) of the wrenching surface axial contour line (5) lies within a range of 65 % $\pm$ 5 % of the polygonal section axial length (m).

6. Screw connection element according to any one of claims 1 to 5, **characterised in that** the wrenching surface axial contour line (5) within the first wrenching surface section (2.1) of each wrenching surface (2) has a parabolic curve profile.

7. Screw connection element according to any one of claims 1 to 6, **characterised in that** the contour height (r) of the wrenching surface axial contour line (5) within the first wrenching surface section (2.1) of each wrenching surface (2), for a given polygonal section axial length (m), lies within a range of $\pm$ 5 % of the contour height (r) determined according to the function

$$contour\ height\ (r)$$

$$= \left( \left( -\frac{4}{5} \left( \frac{end\ face\ distance\ (a)}{polygonal\ section\ axial\ lenght\ (m)} \right)^2 \right. \right.$$

$$\left. \left. + \frac{5}{8} \left( \frac{end\ face\ distance\ (a)}{polygonal\ section\ axial\ lenght\ (m)} \right) + \frac{2}{7} \right) \cdot polygonal\ section\ axial\ lenght\ (m) \right)$$

8. Screw connection element according to any one of claims 1 to 7, **characterised in that** the circumferentially adjacent wrenching surfaces (2) of the polygonal section (1) form, in all cross-sectional planes oriented perpendicularly to the central axis (8) of the screw connection element, a cross-sectional contour in the form of a convex polygon that is rotationally symmetrical about the central axis (8).

9. Screw connection element according to claim 8, **characterised in that** the polygonal section (1) has an even number of wrenching surfaces (2).

10. Screw connection element according to claim 9, **characterised in that** the circumferentially adjacent wrenching surfaces (2) of the polygonal section (1) form, in all cross-sectional planes oriented perpendicularly to the central axis (8) of the screw connection element, a cross-sectional contour in the form of a regular convex hexagon.

**Revendications**

1. Élément de raccordement à vis avec entraînement polygonal externe pour l'entraînement au moyen d'une clé à douille polygonale, ledit élément de raccordement à vis étant réalisé sous la forme d'un écrou ou d'une vis et comportant :

- une section filetée (9) s'étendant axialement le long d'un axe central (8) de l'élément de raccordement à vis,
- une section polygonale (1) conçue pour former l'entraînement polygonal externe sur la périphérie externe de l'écrou ou sur la périphérie externe de la tête de vis,
- une surface frontale plane (6) disposée sur la zone d'extrémité axiale côté outil de la section polygonale (1) et orientée perpendiculairement à l'axe central (8), ainsi qu'un plan d'appui (7) disposé sur la zone d'extrémité axiale côté appui de la section polygonale (1) et orienté perpendiculairement à l'axe central (8), la section polygonale (1) s'étendant entre la surface frontale (6) et le plan d'appui (7) sur une longueur axiale polygonale prédéfinie (m), et la distance axiale d'un plan de section transversale, disposé à l'intérieur de la section polygonale (1) et orienté perpendiculairement à l'axe central, par rapport à la surface frontale (6) étant définie comme distance de surface frontale (a),

dans lequel la section polygonale (1) présente plusieurs surfaces de clé (2) s'étendant chacune de la surface frontale (6) jusqu'au plan d'appui (7), et dans lequel chaque ligne d'intersection de l'une des surfaces de clé (2) forme une ligne de contour transversal de surface de clé (4) avec un plan de section transversale orienté perpendiculairement à l'axe central (8) de l'élément de raccordement à vis, et dans lequel les surfaces de clé (2) sont conçues de telle sorte que toutes les lignes de contour transversal de surface de clé (4) sont rectilignes, dans lequel les surfaces de clé (2) circonférentiellement adjacentes de la section polygonale (1) forment, dans tous les plans de section transversale orientés perpendiculairement à l'axe central (8) de l'élément de raccordement à vis, un contour de section transversale ayant la forme d'un polygone convexe, et dans lequel le nombre de sommets dudit contour de section transversale polygonal correspond au nombre de surfaces de clé (2) de la section polygonale (1),

dans lequel chacune des surfaces de clé (2) présente une ligne de contour axial de surface de clé (5) s'étendant de la surface frontale (6) jusqu'au plan d'appui (7),

ladite ligne représentant le tracé de la ligne d'intersection de la surface de clé (2) correspondante dans un plan de coupe axial contenant l'axe central (8) et orienté perpendiculairement aux lignes de contour transversal de surface de clé (4)de la surface de clé (2) correspondante dans ledit plan de coupe axial, la distance d'un point de la ligne de contour axial de surface de clé (5) par rapport à l'axe central (8) étant définie comme la hauteur de contour axial (r),

dans lequel

- la section polygonale (1) présente une première portion axiale (1.1) qui s'étend de la surface frontale (6) jusqu'à un plan de transition (1.3) orienté perpendiculairement à l'axe central (8) et une seconde portion axiale (1.2) qui s'étend du plan de transition (1.3) jusqu'au plan d'appui (7), chacune des surfaces de clé (2) présentant respectivement une première section de surface de clé (2.1) située à l'intérieur de la première portion axiale (1.1) et une seconde section de surface de clé (2.2) située à l'intérieur de la seconde portion axiale (1.2),
- la première portion axiale (1.1) de la section polygonale (1) est réalisée en forme de dôme, la ligne de contour axial de surface de clé (5) étant bombée vers l'extérieur de manière convexe à l'intérieur de la première section de surface de clé (2.1) de chacune des surfaces de clé (2), le bombement présentant un maximum de bombement avec une hauteur de contour axial maximale ($r_{max}$) à une distance de surface frontale ($a_{rmax}$) du maximum de bombement comprise entre la surface frontale (6) et le plan de transition (1.3),
- la ligne de contour axial de surface de clé (5) de chacune des surfaces de clé (2) présente une courbure continue sur toute sa longueur respective,

**caractérisé en ce que**

- la seconde portion axiale (1.2) de la section polygonale (1) est réalisée sous la forme d'un tronc de pyramide rectiligne qui se rétrécit du plan de transition (1.3) vers le plan d'appui (7), la ligne de contour axial de surface de clé (5) à l'intérieur de la seconde section de surface de clé (2.2) de chacune des surfaces de clé (2) étant une ligne droite et formant avec l'axe central (8) un angle d'inclinaison compris entre 10° et 40°.

2. Élément de raccordement à vis selon la revendication 1, **caractérisé en ce que** la distance de surface frontale (at) du plan de transition (1.3) est égale à 60 % $\pm$ 5 % de la longueur axiale polygonale (m).

3. Élément de raccordement à vis selon l'une des revendications 1 ou 2, **caractérisé en ce que** la distance de surface frontale ($a_{rmax}$) du maximum de bombement est égale à 40 % $\pm$ 5 % de la longueur axiale polygonale (m).

4. Élément de raccordement à vis selon l'une quelconque des revendications 1 à 3, **caractérisé en ce que,** à l'intérieur de la seconde section de surface de clé (2.2) de chacune des surfaces de clé (2), l'angle d'inclinaison formé entre la ligne de contour axial de surface de clé (5) et l'axe central (8) est compris dans la plage de 25° $\pm$ 5°.

5. Élément de raccordement à vis selon l'une quelconque des revendications 1 à 4, **caractérisé en ce que** la hauteur de contour axial maximale ($r_{max}$) de la ligne de contour axial de surface de clé (5) est comprise dans la plage de 65 % $\pm$ 5 % de la longueur axiale polygonale (m).

6. Élément de raccordement à vis selon l'une quelconque des revendications 1 à 5, **caractérisé en ce que** la ligne de contour axial de surface de clé (5) à l'intérieur de la première section de surface de clé (2.1) de chacune des surfaces de clé (2) présente une courbure parabolique.

7. Élément de raccordement à vis selon l'une quelconque des revendications 1 à 6, **caractérisé en ce que** la hauteur de contour (r) de la ligne de contour axial de surface de clé (5) à l'intérieur de la première section de surface de clé (2.1) de chacune des surfaces de clé (2) est comprise dans une plage de $\pm$ 5 % de la hauteur de contour (r) déterminée selon la fonction

$$hauteur\ de\ contour\ (r)$$

$$= \left( \left( -\frac{4}{5}\left( \frac{distance\ de\ surface\ frontale\ (a)}{longueur\ axiale\ polygonale\ (m)} \right)^2 + \frac{5}{8}\left( \frac{distance\ de\ surface\ frontale\ (a)}{longueur\ axiale\ polygonale\ (m)} \right) \right.$$

$$\left. + \frac{2}{7} \right) \cdot longueur\ axiale\ polygonale\ (m) \right)$$

pour une longueur axiale polygonale prédéfinie (m).

8. Élément de raccordement à vis selon l'une quelconque des revendications 1 à 7, **caractérisé en ce que** les surfaces de clé (2) circonférentiellement adjacentes de la section polygonale (1) forment, dans tous les plans de section transversale orientés perpendiculairement à l'axe central (8) de l'élément de raccordement à vis, un contour de section transversale ayant la forme d'un polygone convexe présentant une symétrie de révolution autour de l'axe central.

9. Élément de raccordement à vis selon la revendication 8, **caractérisé en ce que** la section polygonale (1) présente un nombre pair de surfaces de clé (2).

10. Élément de raccordement à vis selon la revendication 9, **caractérisé en ce que** les surfaces de clé (2) circonférentiellement adjacentes de la section polygonale (1) forment, dans tous les plans de section transversale orientés perpendiculairement à l'axe central (8) de l'élément de raccordement à vis, un contour de section transversale ayant la forme d'un hexagone convexe régulier.

**FIG. 1**

**FIG. 2**

**FIG. 3**

**FIG. 4**

**FIG. 5**

**FIG. 6**

(a)

(b)

**FIG. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009015275 U1
- US 9763754 B2
- WO 2014012970 A1
- DE 29819955 U1
- US 2003077113 A1